# EUROPÄISCHE PATENTSCHRIFT

(11) **EP 1 977 133 B1**
(45) Veröffentlichungstag und Bekanntmachung des Hinweises auf die Patenterteilung: **25.05.2011**
(21) Anmeldenummer: 06841614.8
(22) Anmeldetag: 22.12.2006
(51) Int. Cl.: F16D 65/21

(54) **ELEKTROMECHANISCHE REIBUNGSBREMSE**
ELECTROMECHANICAL FRICTION BRAKE
FREIN À FRICTION ÉLECTROMÉCANIQUE

(30) Priorität: 09.01.2006 DE 102006001133
(43) Veröffentlichungstag der Anmeldung: 08.10.2008
(73) Patentinhaber: Robert Bosch GmbH, 70442 Stuttgart (DE)
(72) Erfinder: CAO, Chi-Thuan, 70825 Korntal-Muenchingen (DE); BAUMANN, Dietmar, 71282 Hemmingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 74360 Ilsfeld (DE); GOETZELMANN, Bernd, 71063 Sindelfingen (DE)
(86) Internationale Anmeldenummer: PCT/EP2006/070202
(87) Internationale Veröffentlichungsnummer: WO 2007/080057

(56) Entgegenhaltungen:
- WO-A-02/40887
- WO-A-02/095255
- WO-A-2005/057041
- DE-A1- 10 218 825
- DE-A1- 10 229 455
- GB-A- 2 236 365

## Beschreibung

### Stand der Technik

Die Erfindung betrifft eine elektromechanische Reibungsbremse mit den Merkmalen des Oberbegriffs des Anspruchs 1, die als Fahrzeugbremse für Kraftfahrzeuge vorgesehen ist.

Elektromechanische Reibungsbremsen sind bekannt. Beispielhaft wird auf die WO 02/40 887 A1 verwiesen. Die bekannte Reibungsbremse ist als Scheibenbremse ausgebildet. Sie weist einen Reibbremsbelag auf, der zum Bremsen mit einer elektromechanischen Betätigungseinrichtung gegen eine Bremsscheibe drückbar ist. Die Bremsscheibe bildet einen Bremskörper, im Falle einer Trommelbremse ist der Bremskörper die Bremstrommel. Die Erfindung ist auch auf andere Bremsenbauformen anwendbar. Die Betätigungseinrichtung der bekannten Reibungsbremse weist einen Elektromotor und ein Schraubgetriebe in Bauform eines Kugelgewindetriebs zur Umsetzung der Rotationsbewegung des Elektromotors in eine Translationsbewegung zum Drücken des Reibbremsbelags gegen den Bremskörper auf. Dem Elektromotor und dem Gewindetrieb kann ein Untersetzungsgetriebe zwischengeschaltet sein.

Die bekannte Reibungsbremse weist eine Selbstverstärkungseinrichtung auf, die eine von der drehenden Bremsscheibe auf den beim Bremsen gegen sie gedrückten Reibbremsbelag ausgeübte Reibungskraft in eine Andruckkraft wandelt, die den Reibbremsbelag zusätzlich zu einer von der Betätigungseinrichtung bewirkten Andruckkraft gegen die Bremsscheibe drückt. Zur Unterscheidung von der Andruckkraft, die die Betätigungseinrichtung bewirkt, wird die von der Selbstverstärkungseinrichtung bewirkte Andruckkraft nachfolgend als Selbstverstärkungskraft bezeichnet werden. Die bekannte Reibungsbremse weist einen Keilmechanismus mit Keilelementen auf einer der Bremsscheibe abgewandten Rückseite des Reibbremsbelags auf, die in einem Keilwinkel schräg zur Bremsscheibe verlaufen. Die Keilelemente stützen sich an Widerlagerflächen im Bremssattel ab, die ebenfalls im Keilwinkel schräg zur Bremsscheibe verlaufen. Die von der drehenden Bremsscheibe in Umfangsrichtung auf den beim Bremsen gegen sie gedrückten Reibbremsbelag ausgeübte Reibungskraft verursacht aufgrund des Keilprinzips eine Kraft mit einer Komponente quer zur Bremsscheibe. Diese Kraftkomponente ist die nachfolgend als Selbstverstärkungskraft bezeichnete Andruckkraft, die von der Selbstverstärkungseinrichtung bewirkt wird.

Die bekannte Reibungsbremse weist Keilelemente und Widerlagerflächen auf, die in entgegengesetzten Richtungen ansteigen, um eine Selbstverstärkung in beiden Drehrichtungen der Bremsscheibe zu erzielen. Die Keilwinkel für Vorwärts- und Rückwärtsfahrt können unterschiedlich sein, um unterschiedlich hohe Selbstverstärkungen zu erzielen. Es sind auch andere Selbstverstärkungseinrichtungen möglich, beispielsweise mit auf Zug oder auf Druck beanspruchten Stützhebeln, die den Reibbremsbelag in einem Stützwinkel schräg zu einer Normalen zur Bremsscheibe abstützen. Es handelt sich um ein mechanisches Äquivalent zum beschriebenen Keilmechanismus, wobei der Stützwinkel des Hebelmechanismus dem Keilwinkel des Keilmechanismus entspricht. Auch andere, beispielsweise hydraulische Selbstverstärkungseinrichtungen sind bekannt und möglich.

### Erläuterung und Vorteile der Erfindung

Die Offenlegungsschrift DE 102 01 607 A1, die den Oberbegriff des Anspruchs 1 definiert, offenbart eine Reibungsbremse in Baumform einer Scheibenbremse, die ebenfalls eine Selbstverstärkungseinrichtung mit einem Keilmechanismus aufweist. Betätigt wird die bekannte Scheibenbremse mit einem Elektromagneten, also einem Linearantrieb.

### Erläuterung und Vorteile der Erfindung

Die Betätigungseinrichtung der erfindungsgemäßen Reibungsbremse mit den Merkmalen des Anspruchs 1 weist einen Linearantrieb mit einem Elektromagneten zum Drücken des Reibbremsbelags gegen den Bremskörper auf. Der Linearantrieb erzeugt eine translatorische, insbesondere aber nicht zwingend gerade Bewegung zum Drücken des Reibbremsbelags gegen den Bremskörper. Der Linearantrieb hat den Vorteil, dass er eine Translationsbewegung erzeugt, mit der der Reibbremsbelag unmittelbar bewegt und gegen den Bremskörper gedrückt werden kann. Es entfällt die Umsetzung einer Rotations- in eine Translationsbewegung. Der Linearantrieb kann als Direktantrieb, d. h. ohne Zwischenschaltung eines Unter- oder auch Übersetzungsgetriebes ausgebildet sein. Durch den Entfall von Getrieben verringert sich der Herstellungsaufwand, Baugröße und Masse können verringert werden. Es entfallen Verschleiß und Wartung der Getriebe, der Wartungsaufwand ist verringert. Ebenfalls ist eine Ausfallwahrscheinlichkeit des Linearantriebs gegenüber einem Elektromotor verringert. Ein weiterer Vorteil ist ein bauartbedingt begrenzter Hub eines Linearantriebs, der konstruktionsabhängig eine Ausführung der Fahrzeugbremse ohne Endanschläge für den Reibbremsbelag ermöglicht.

Eine Magnetkraftkennlinie des Elektromagneten des Linearantriebs ist nicht proportional. Anspruch 2 sieht eine progressive Magnetkraftkennlinie vor. Die Magnetkraftkennlinie gibt den Zusammenhang zwischen der Kraft des Elektromagneten und dem Weg (bei beispielsweise konstanter elektrischer Spannung) an. Die Abhängigkeit der Magnetkraft vom Weg lässt sich u. a. durch die geometrischen Formen eines Ankers und eines Polstücks des Elektromagneten beeinflussen. Durch die nicht-proportionale Magnetkraftkennlinie ist eine Anpassung an die Charakteristik der Reibungsbremse möglich. Durch eine progressive Magnetkraft-Kennlinie wird eine überproportional ansteigende Betätigungskraft bei großer Bremskraft erreicht. Zielsetzung ist eine Optimierung des Elektromagneten hinsichtlich beispielsweise der Hubarbeit (Betätigungsenergie der Reibungsbremse) und/oder der Baugröße des Elektromagneten.

Es genügt der gewünschte Magnetkraft-Kennlinienverlauf im Arbeitsbereich des Elektromagneten, also in dem Hubbereich, der bei Betätigung der Reibungsbremse benutzt wird. Ein abweichender Magnetkraft-Kennlinienverlauf außerhalb des Arbeitsbereichs ist ohne Bedeutung.

Die Unteransprüche haben vorteilhafte Ausgestaltungen und Weiterbildungen der im Anspruch 1 angegebenen Erfindung zum Gegenstand.

Anspruch 3 sieht eine selbsthemmende Ausbildung der Selbstverstärkungseinrichtung vor. Der Keilwinkel wird so spitz gewählt, dass Selbsthemmung auftritt. Um ein Blockieren des Bremskörpers zu vermeiden, muss der Reibbremsbelag bei betätigter Reibungsbremse von der Betätigungseinrichtung zurückgehalten werden gegen eine Bewegung in Zuspannrichtung der Reibungsbremse. Der Keilwinkel kann so spitz gewählt werden, dass bei kleinstem Reibwert zwischen dem Reibbremsbelag und dem Bremskörper Selbsthemmung auftritt. Bei kleinstem Reibwert kann die erfindungsgemäße Reibungsbremse theoretisch energielos betätigt werden, bei einem mittleren Reibwert, dem in der Praxis häufigsten Fall, erfolgt die Betätigung der Reibungsbremse mit geringer Betätigungsenergie. Zum Ausgleich sieht Anspruch 4 ein Rückstellfederelement vor, das den Reibbremsbelag in Löserichtung der Reibungsbremse beaufschlagt. Diese wird insbesondere so ausgelegt, dass ihre Rückstellfederkraft bei größtem Reibwert zwischen dem Reibbremsbelag und dem Bremskörper den Reibbremsbelag gegen eine Bewegung in Zuspannrichtung der Reibungsbremse hält. Ggf. kann ein Sicherheitszuschlag gemacht, d. h. die Rückstellfederkraft größer gewählt werden, um ein Blockieren des Bremskörpers trotz der selbsthemmenden Selbstverstärkungseinrichtung zuverlässig zu vermeiden. Der Reibbremsbelag wird durch die vom drehenden Bremskörper auf den beim Bremsen gegen den Bremskörper gedrückten Reibbremsbelag ausgeübte Reibungskraft in Zuspannrichtung der Reibungsbremse beaufschlagt. Das Rückstellfederelement hat den Vorteil, dass seine Rückstellfederkraft der Reibungskraft, die der drehende Bremskörper auf den beim Bremsen gegen ihn gedrückten Reibbremsbelag ausübt, entgegen gerichtet ist, so dass die von der Betätigungseinrichtung aufzubringende Betätigungskraft verringert ist. Hält das Rückstellfederelement den Reibbremsbelag bei größtem Reibwert gegen eine Bewegung in Zuspannrichtung zurück, hat das den zusätzlichen Vorteil, dass eine Selbsthemmung der Reibungsbremse selbst bei Ausfall der Betätigungseinrichtung vermieden wird, d. h. ein ungewolltes Blockieren des Bremskörpers wird verhindert.

### Zeichnung

Die Erfindung wird nachfolgend anhand in der Zeichnung dargestellter Ausführungsbeispiele näher erläutert. Es zeigen:
- Figur 1: eine erfindungsgemäße Reibungsbremse;
- Figur 2: einen Elektromagneten einer Betätigungseinrichtung der Rei- bungsbremse aus Figur 1;
- Figur 3: eine Magnetkraft-Kennlinie des Elektromagneten aus Figur 2;
- Figur 4: ein Rückstellfederelement der Reibungsbremse aus Figur 1;
- Figur 5: Teile einer abgewandelten Reibungsbremse gemäß der Erfin- dung; und
- Figur 6: eine Einzelheitsdarstellung einer weiteren Abwandlung der Rei- bungsbremse aus Figur 1 gemäß der Erfindung.

Die Figuren sind als schematisierte und vereinfachte Darstellungen zum Verständnis der Erfindung zu verstehen.

### Beschreibung der Ausführungsbeispiele

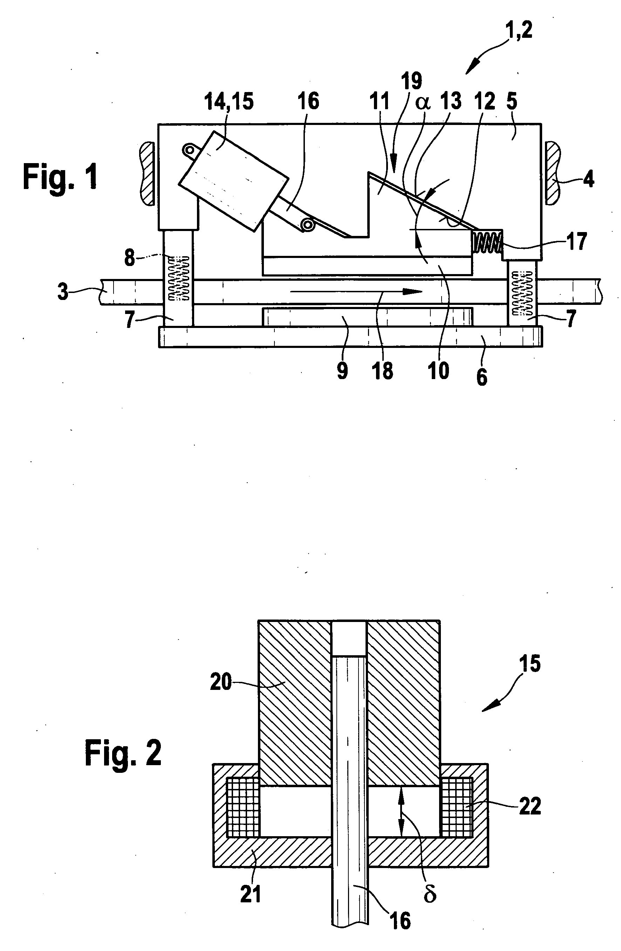

Die in Figur 1 dargestellte erfindungsgemäße elektromechanische Reibungsbremse ist als Scheibenbremse 1 ausgebildet. Sie weist einen Bremssattel 2 auf, der als sog. Schwimmsattel mit einer symbolisch dargestellten Sattelführung 4 quer zu einer Bremsscheibe 3 verschieblich geführt ist. Die Bremsscheibe 3 bildet einen mit der Scheibenbremse 1 zu bremsenden Bremskörper. Der Bremssattel 2 ist als Rahmensattel ausgebildet, er weist einen Grundkörper 5 auf einer Seite der Bremsscheibe 3 und eine Platte 6 auf der gegenüber liegenden Seite der Bremsscheibe 3 auf. Der Grundkörper 5 und die Platte 6 sind mit zwei Zugankern 7 starr miteinander verbunden. Eine elastische Verformbarkeit bzw. Aufweitbarkeit des Bremssattels 2 ist durch die Federsymbole 8 in den Zugankern 7 angedeutet.

Auf der Platte 6 des Bremssattels 2 ist ein Reibbremsbelag 9 unbeweglich angeordnet, der nachfolgend als feststehender Reibbremsbelag 9 bezeichnet werden wird. Auf der anderen Seite der Bremsscheibe 3 ist ein in Umfangs- oder Sehnenrichtung der Bremsscheibe 3 beweglicher Reibbremsbelag 10 im Bremssattel 2 angeordnet. Die Bremsscheibe 3 bildet einen mit der Scheibenbremse 1 zu bremsenden Bremskörper. Der bewegliche Reibbremsbelag 10 weist einen Keilkörper 11 mit mehreren, zueinander parallelen Keilflächen 12 auf seiner der Bremsscheibe 3 abgewandten Rückseite auf. Die Keilflächen 12 verlaufen in einem Keilwinkel α zur Umfangsrichtung der Bremsscheibe 3. Mit den Keilflächen 12 stützt sich der bewegliche Reibbremsbelag 10 in Umfangsrichtung der Bremsscheibe 3 verschieblich an komplementären Widerlagerflächen 13 des Grundteils 5 des Bremssattels 2 ab. Die Widerlagerflächen 13 verlaufen ebenfalls im Keilwinkel α zur Bremsscheibe 3. Genau genommen ist der Reibbremsbelag 10 auf einer schraubenlinienförmigen Bahn, deren Steigung dem Keilwinkel α entspricht und deren gedachte Achse mit einer gedachten Drehachse der Bremsscheibe 3 übereinstimmt, beweglich. Andere Bahnverläufe sind möglich, beispielsweise in Sehnenrichtung und zugleich im Keilwinkel α zur Bremsscheibe 3 (nicht dargestellt). Wesentlich zur Erzielung einer noch zu erläuternden Selbstverstärkung ist, dass bei betätigter Scheibenbremse 1 eine von der drehenden Bremsscheibe 3 auf den gegen sie gedrückten Reibbremsbelag 10 ausgeübte Reibungskraft den Reibbremsbelag 10 in Richtung eines enger werdenden Keilspalts zwischen der Bremsscheibe 3 und den Widerlagerflächen 13 beaufschlagt.

Die Scheibenbremse 1 weist einen Linearantrieb 14 als Betätigungseinrichtung auf. Im Ausführungsbeispiel ist der Linearantrieb 14 ein Geradantrieb, das ist allerdings nicht zwingend. Der Linearantrieb 14 weist einen in Figur 2 im Achsschnitt größer dargestellten Elektromagneten 15 auf, er stützt sich am Grundkörper 5 des Bremssattels 2 ab und greift mit einem Stößel 16 am Keilekörper 11 des beweglichen Reibbremsbelags 10 an. Die Wirkungsrichtung des Linearantriebs 14 verläuft in Verschieberichtung des Reibbremsbelags 10.

Ein Rückstellfederelement 17 beaufschlagt den Körper 11 in einer Löserichtung der Scheibenbremse 1.

Zur Betätigung der Scheibenbremse 1 wird der Elektromagnet 15 der Betätigungseinrichtung 14 bestromt und verschiebt dadurch den Keilkörper 11 mit dem beweglichen Reibbremsbelag 10 im Keilwinkel α zur Bremsscheibe 3, so dass der bewegliche Reibbremsbelag 10 gegen die Bremsscheibe 3 gedrückt wird. Eine Reaktionskraft verschiebt den Bremssattel 2 quer zur Bremsscheibe 3, so dass der feststehende Reibbremsbelag 9 gegen die andere Seite der Bremsscheibe 3 gedrückt wird, die Bremsscheibe 3 wird gebremst. Die Bremsscheibe 3, die in der mit Pfeil 18 angegebenen Drehrichtung dreht, übt eine Reibungskraft in Umfangsrichtung auf die gegen sie gedrückten Reibbremsbeläge 9, 10 aus, die den beweglichen Reibbremsbelag 10 in Umfangsrichtung der Bremsscheibe 3 und in Richtung eines enger werdenden Keilspalts zwischen den Widerlagerflächen 13 und der Bremsscheibe 3 beaufschlagt. Aufgrund des Keilprinzips üben die Widerlagerflächen 13 des Grundteils 5 des Bremssattels 2 eine Kraft auf den Keilkörper 11 aus, die eine Komponente quer zur Bremsscheibe 3 aufweist. Diese Kraftkomponente ist eine Andruckkraft, die den Reibbremsbelag 10 zusätzlich zu der von der Betätigungseinrichtung 14 aufgebrachten Andruckkraft gegen die Bremsscheibe 3 drückt. Die von der Betätigungseinrichtung 14 aufgebrachte Bremskraft wird auf diese Weise verstärkt. Der Keilkörper 11 und die Widerlagerflächen 13 des Grundteils 5 des Bremssattels 2 bilden eine Selbstverstärkungseinrichtung 19 der erfindungsgemäßen Reibungsbremse 1, die eine von der drehenden Bremsscheibe 3 auf den gegen sie gedrückten, beweglichen Reibbremsbelag 10 ausgeübte Reibungskraft in eine Andruckkraft wandelt, die den Reibbremsbelag 10 gegen die Bremsscheibe 3 drückt. Die von der Selbstverstärkungseinrichtung 19 bewirkte Andruckkraft des Reibbremsbelags 10 gegen die Bremsscheibe 3 wird nachfolgend als Selbstverstärkungskraft bezeichnet zur Unterscheidung von der Andruckkraft, die die Betätigungseinrichtung 14 bewirkt.

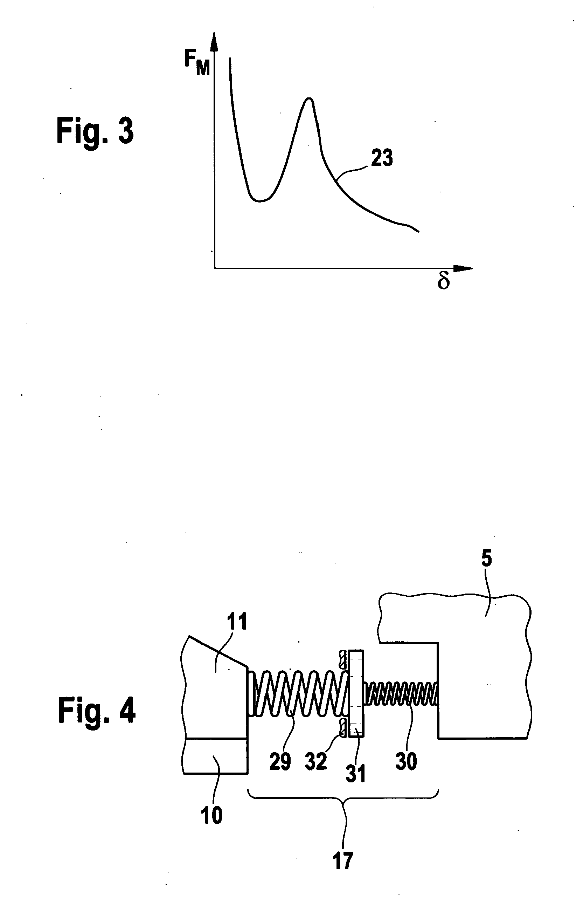

Der in Figur 2 im Achsschnitt dargestellte Elektromagnet 15 der Betätigungseinrichtung 14 weist einen zylinderförmigen Anker 20 auf, der mit einem Ende in einen Poltopf 21 eintaucht. In den Anker 20 ist der Stößel 16 eingepresst, der axial durch den Poltopf 21 durchtritt. Eine Bestromung einer Spule 22 des Elektromagneten 15 bewirkt ein Magnetfeld und eine Magnetkraft, die den Anker 20 in den Poltopf 21 hinein zieht. Eine Magnetkraft-Kennlinie 23 ist nicht proportional, sondern weist beispielsweise den in Figur 3 dargestellten Verlauf auf. In dem Hubbereich oder Arbeitsbereich des Elektromagneten 15, der zum Verschieben des Reibbremsbelags 10 genutzt wird, ist die Magnetkraft-Kennlinie 23 des Elektromagneten 15 progressiv, d. h. eine Magnetkraft nimmt überproportional mit dem Weg zu. Die Magnetkraft-Kennlinie 23 gibt die Abhängigkeit der Magnetkraft F_{M} des Elektromagneten 15 in Abhängigkeit vom Hub bzw. dem mit δ bezeichneten Spalt zwischen dem Anker 20 und einer Stirnwand des Poltopfs 21 bei konstanter elektrischer Spannung an der Spule 22 an. Die Magnetkraft F_{M} steigt bei Annäherung des Ankers 20 an die Stirnwand des Poltopfs 21 stark an. Durch die geometrische Formgebung des Ankers 20 und des Poltopfs 21 lässt sich der Verlauf der Magnetkraft-Kennlinie 23 beeinflussen. Beispielsweise durch eine Kegelform des Ankers 20 und/oder des Poltopfs 21 ändert sich die Größe eines Ringspalts zwischen dem Anker 20 und dem Poltopf 21 über den Hub des Elektromagneten 15. Dadurch werden der magnetische Widerstand, die Magnetfeldstärke und die Magnetkraft geändert. Durch die gewählte progressive Magnetkraft-Kennlinie 23 steigt die Magnetkraft des Elektromagneten 14 mit zunehmender Verschiebung des beweglichen Reibbremsbelags 10, also bei hoher Betätigungs-, Andruck- und Bremskraft überproportional an.

Der Keilwinkel α der Scheibenbremse 1 ist so gewählt, dass bei kleinstem Reibwert µₘᵢₙ zwischen dem beweglichen Reibbremsbelag 10 und der Bremsscheibe 3 Selbsthemmung der Scheibenbremse 1 auftritt, d. h. der Reibbremsbelag 10 verbleibt bei betätigter Scheibenbremse 1 kraftfrei in seiner Stellung, er bewegt sich weder tiefer in den Keilspalt zwischen den Widerlagerflächen 13 und der Bremsscheibe 3 hinein noch heraus.

Das Rückstellfederelement 17 ist so ausgelegt, dass es bei maximalem Reibwert µₘₐₓ zwischen dem beweglichen Reibbremsbelag 10 und der Bremsscheibe 3 ein Kräftegleichgewicht am Reibbremsbelag 10 bewirkt, d. h. die von der drehenden Bremsscheibe 3 auf den gegen sie gedrückten beweglichen Reibbremsbelag 10 ausgeübte Reibungskraft ist bei größtem Reibwert µₘₐₓ so groß wie die in Löserichtung der Scheibenbremse 1 wirkende Rückstellkraft des Rückstellfederelements 17. Dadurch wird ein Blockieren der Bremsscheibe 3 auch bei Ausfall der Betätigungseinrichtung 14 verhindert. Zur Betätigung der Scheibenbremse 1 muss die Betätigungseinrichtung 14 lediglich die Differenzkraft zwischen der von der drehenden Bremsscheibe 3 auf den gegen sie gedrückten beweglichen Reibbremsbelag 10 ausgeübte Reibungskraft und der Rückstellkraft des Rückstellfederelements 17 aufbringen. Die Betätigungskraft und Betätigungsenergie der Scheibenbremse 1 sind dadurch verringert. Durch die selbsthemmende Auslegung der Scheibenbremse 1 und die Kompensation mit dem Rückstellfederelement 17 verringern sich die zur Erzielung einer bestimmten Bremskraft notwendige Betätigungskraft und Betätigungsenergie der erfindungsgemäßen Scheibenbremse 1 im Vergleich mit einer selbstverstärkenden Scheibenbremse 1, die selbsthemmungsfrei ausgelegt ist und kein Rückstellfederelement 17 aufweist.

Eine Begrenzung der Federkraft des Rückstellfederelements 17 und damit der auf den beweglichen Reibbremsbelag 10 ausgeübten Rückstellkraft ist mit der in Figur 4 dargestellten Reihenschaltung zweier Federn 29, 30 möglich. Eine der beiden Federn 30 stützt sich am Grundkörper 5 des Bremssattels 2 ab, von dem in Figur 4 nur ein Bruchstück dargestellt ist. Die andere Feder 29 beaufschlagt den Keilkörper 11, der den beweglichen Reibbremsbelag 10 trägt. Auch vom Keilkörper 11 und dem Reibbremsbelag 10 ist in Figur 4 nur ein Bruchstück dargestellt. Zwischen den beiden Federn 29, 30 ist eine Scheibe 31 angeordnet, die von der sich am Grundkörper 5 des Bremssattels 2 abstützenden Feder 30 gegen ein symbolisch dargestelltes Widerlager 32 gedrückt wird, das Teil des Grundkörpers 5 ist. Die Feder 30 steht unter Vorspannung. Bei Betätigung der Scheibenbremse 1, d. h. bei einer Verschiebung des Keilkörpers 11 mit dem Reibbremsbelag 10 in einer Zuspannrichtung, wird zunächst nur die den Keilkörper 11 beaufschlagende Feder 29 verformt. Erst wenn die Feder- und Rückstellkraft dieser Feder 29 größer als die Vorspannung der sich am Grundkörper 5 des Bremssattels 2 abstützenden Feder 30 ist, wird letztere Feder 30 elastisch verformt. Deren Federkonstante ist kleiner als die Federkonstante der den Keilkörper 11 beaufschlagenden Feder 29, wodurch die Federkennlinie beider Federn 29, 30 ab dem Abheben der Scheibe 31 vom Widerlager 32 flacher wird, d. h. der Anstieg der Federkraft mit der Verschiebung des Keilkörpers 11 verringert sich und ist durch die kleinere Federkonstante der sich am Grundkörper 5 des Bremssattels 2 abstützenden Feder 30 begrenzt. Die beiden in Reihe geschalteten Federn 29, 30 treten an die Stelle des in Figur 1 dargestellten Rückstellfederelements 17.

Die Federkennlinie der den Keilkörper 11 beaufschlagenden Feder 29 wird so gewählt, dass bei maximalem Reibwert µₘₐₓ zwischen dem beweglichen Reibbremsbelag 10 und der in Figur 4 nicht dargestellten Bremsscheibe 3 ein Gleichgewicht zwischen der von der Bremsscheibe 3 auf den beim Bremsen gegen sie gedrückten Reibbremsbelag 10 ausgeübten Reibungskraft und der Rückstellkraft der Feder 29 besteht. Die Vorspannung der sich am Grundkörper 5 des Bremssattels 2 abstützenden Feder 30 ist so gewählt, dass die Scheibe 31 bei Erreichen der maximalen Bremskraft bei maximalem Reibwert µₘₐₓ vom Widerlager 32 abhebt. Der Anstieg der von den Federn 29, 30 ausgeübten Rückstellkraft und damit die von der Betätigungseinrichtung 14 aufzubringende Betätigungskraft steigt ab Erreichen der Vorspannkraft der Feder 30 nur noch gering an, die Federkraft ist begrenzt.

Eine degressive Federkennlinie oder sogar eine abnehmende Federkraft beim Überschreiten einer maximalen Federkraft kann mit beispielsweise einer Tellerfeder oder einem Tellerfederpaket als Rückstellfederelement 17 erreicht werden (nicht dargestellt). Tellerfedern haben die Eigenschaft, dass ihre Federkraft abnimmt, wenn sich die Tellerfeder durch Verformen der Form einer ebenen (Loch-) Scheibe nähert.

Die vorstehend erläuterten Möglichkeiten zur Verwirklichung einer abknickenden Federkraftkennlinie durch Reihenschaltung zweier Federn 29, 30, einer Federkraftbegrenzung, einer degressiven Federkennlinie oder einer nach Überschreiten einer maximalen Federkraft wieder abfallenden Federkraft verringern die erforderliche und von der Betätigungseinrichtung 14 aufzubringende Betätigungskraft und Betätigungsenergie der Scheibenbremse 1 bei großer Bremskraft und einem Reibwert µ, der kleiner als der maximale Reibwert µₘₐₓ ist.

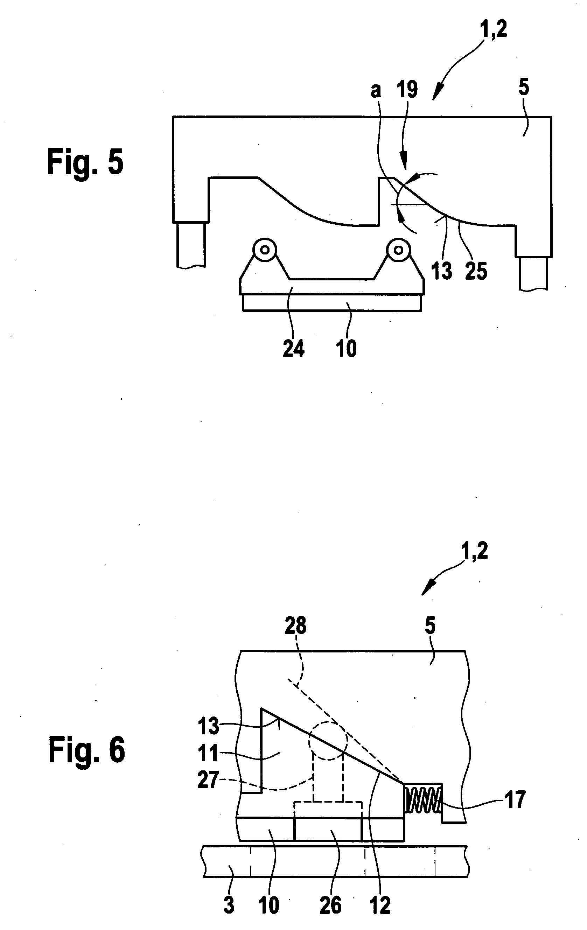

Figur 5 zeigt den Grundkörper 5 des Bremssattels 2 und den beweglichen Reibbremsbelag 10 einer abgewandelten Ausführungsform der erfindungsgemäßen Scheibenbremse 1. Die Selbstverstärkungseinrichtung 19 der Scheibenbremse 1 aus Figur 5 weist einen Rampenmechanismus anstelle eines Keilmechanismus auf. Die Widerlagerflächen 13 des Grundteils 5 des Bremssattels 2 sind Kurven anstatt Geraden, ein Rampenwinkel α ändert sich über den Verlauf der Widerlagerflächen 13. Dadurch ändert sich die Höhe der Selbstverstärkung im Verlauf der auch als Rampen 25 zu bezeichnenden Widerlagerflächen 13. Der bewegliche Reibbremsbelag 10 ist an einem Träger 24 angebracht, über den er sich an den Rampen 25 abstützt. Ein Rückstellfederelement 17 ist bei der Scheibenbremse 1 aus Figur 5 nicht vorhanden, wenngleich es möglich wäre.

Die Rampen 25 haben zunächst einen geraden Verlauf, der Rampenwinkel α ist in diesem Bereich so gewählt, dass Selbsthemmung beim größt möglichen Reibwert µₘₐₓ zwischen der Bremsscheibe 3 und dem beweglichen Reibbremsbelag 10 auftritt. Die Länge des geraden Abschnitts der Rampen 25 ist so gewählt, dass bei maximalem Reibwert µₘₐₓ eine vorgegebene maximale Bremskraft der Scheibenbremse 1 erreicht wird. Das kann beispielsweise in Blockieren der Bremsscheibe 3 bei maximalem Reibwert µₘₐₓ sein. Im weiteren Verlauf der Rampen 25, d. h. bei größerer Verschiebung des beweglichen Reibbremsbelags 10 in Zustellrichtung, wird der Rampenwinkel α zunehmend spitzer, die Rampen 25 weisen einen gekrümmten Verlauf auf. Die Höhe der Selbstverstärkung wird dadurch größer. Idealerweise ist der Verlauf der Rampen 25 so gewählt, dass in Abhängigkeit vom Reibwert µ bei maximaler Bremskraft Selbsthemmung erreicht wird. Die notwendige Betätigungskraft und Betätigungsenergie ist dadurch gering. Zu bedenken ist, dass der bewegliche Reibbremsbelag 10 immer höchstens so weit verschoben wird, dass die maximale Bremskraft der Scheibenbremse 1 erreicht wird. Der Verschiebeweg ist abhängig vom Reibwert µ. Des Weiteren ist die elastische Aufweitung des Bremssattels 2 zu berücksichtigen. Bei großem Reibwert µ genügt eine kleine Andruckkraft des Reibbremsbelags 10 an die Bremsscheibe 3 zur Erzielung einer bestimmten Bremskraft. Damit ist auch die elastische Aufweitung des Bremssattels 2 klein. Mit kleiner werdendem Reibwert µ wird die zur Erzielung der bestimmten Bremskraft notwendige Andruckkraft und damit die elastische Aufweitung des Bremssattels 2 größer. Ebenfalls vergrößert sich der Verschiebeweg des Reibbremsbelags 10 zur Erzielung der bestimmten Bremskraft. Durch den gekrümmten Verlauf der Rampen 25 wird der Verschiebeweg des Reibbremsbelags 10, der zur Erzielung einer bestimmten Bremskraft in Abhängigkeit vom Reibwert µ notwendig ist, verkürzt, ohne dass die Grenze zur Selbsthemmung überschritten wird.

Mit Ausnahme der vorstehend erläuterten Unterschiede sind die in Figuren 1 und 5 dargestellten Scheibenbremsen 1 übereinstimmend ausgebildet und funktionieren in gleicher Weise, zur Erläuterung von Figur 5 wird zur Vermeidung von Wiederholungen auf die Erläuterungen zu Figur 1 verwiesen. Für gleiche Bauteile werden gleiche Bezugszahlen verwendet. Insbesondere die Betätigungseinrichtung 14 ist der klaren Darstellung wegen in Figur 5 weggelassen.

Figur 6 zeigt eine weitere Ausführungsform der in Figur 1 dargestellten Scheibenbremse 1. Im beweglichen Reibbremsbelag 10 ist ein weiterer Reibbremsbelag 26 angeordnet. Es kann sich auch um einen Bereich des beweglichen Reibbremsbelags 10 handeln, der nicht fest mit dem Keilkörper 11 verbunden ist (nicht dargestellt). Der weitere Reibbremsbelag 26 ist an einem Stößel 27 angebracht, der im Keilelement 11 aufgenommen ist. Der Stößel 27 stützt sich an einer Kurvenbahn 28 ab, die vom Grund einer Nut in der Widerlagerfläche 13 gebildet ist. An der Widerlagerfläche 13 stützt sich wie zu Figur 1 erläutert der Keilkörper 11, der den beweglichen Reibbremsbelag 10 trägt, mit seiner Keilfläche 12 ab. Der an sich verdeckte Stößel 27 und die Kurvenbahn 28 sind in Figur 6 mit Strichlinien dargestellt. Eine Tiefe der Nut, deren Grund die Kurvenbahn 28 bildet, verringert sich über den Verlauf der Widerlagerfläche 13, d. h. die Kurvenbahn 28 nähert sich der Widerlagerfläche 13. Die Abstandsänderung zwischen der Kurvenbahn 28 und der Widerlagerfläche 13 ist stark überhöht dargestellt, um sie sichtbar zu machen.

Wird der bewegliche Reibbremsbelag 10 zur Betätigung der Scheibenbremse 1 verschoben, bewirkt der Stößel 27, der sich an der Kurvenbahn 28 abstützt, eine Relativbewegung des weiteren Reibbremsbelags 26 zum beweglichen Reibbremsbelag 10. Der weitere Reibbremsbelag 26 wird mit zunehmender Verschiebung des beweglichen Reibbremsbelags 10 stärker als der Reibbremsbelag 10 gegen die Bremsscheibe 3 gedrückt. Dadurch ändert sich wegabhängig mit der Verschiebung des beweglichen Reibbremsbelags 10 der insgesamt wirksame, effektive Reibwert µ zwischen der Bremsscheibe 3 und den Reibbremsbelägen 10, 26. Der Reibwert µ ist wegabhängig. Auch dadurch lässt sich die Selbstverstärkung der Scheibenbremse 1 in gewünschter Weise beeinflussen.

Auch hinsichtlich Figur 6 wird zur Vermeidung von Wiederholungen ergänzend auf die Erläuterungen der Figur 1 verwiesen.

## Patentansprüche

1. Selbstverstärkende elektromechanische Reibungsbremse, mit einem Reibbremsbelag (10), der zum Bremsen mit einer Betätigungseinrichtung (14) gegen einen Bremskörper (3) drückbar ist, und mit einer Selbstverstärkungseinrichtung (19), die eine vom drehenden Bremskörper (3) auf den beim Bremsen gegen ihn gedrückten Reibbremsbelag (10) ausgeübte Reibungskraft in eine Andruckkraft wandelt, die den Reibbremsbelag (10) zusätzlich zu einer von der Betätigungseinrichtung (14) aufgebrachten Andruckkraft gegen den Bremskörper (3) drückt, wobei die Betätigungseinrichtung (14) einen Linearantrieb mit einem Elektromagneten (15) zum Drücken des Reibbremsbelags (10) gegen den Bremskörper (3) aufweist, **dadurch gekennzeichnet, dass** der Elektromagnet (15) eine nicht-proportionale Magnetkraft-Kennlinie (23) aufweist.

2. Reibungsbremse nach Anspruch 1, **dadurch gekennzeichnet, dass** der Elektromagnet (15) eine progressive Magnetkraft-Kennlinie (23) aufweist.

3. Reibungsbremse nach Anspruch 1, **dadurch gekennzeichnet, dass** die Selbstverstärkungseinrichtung (19) selbsthemmend ausgebildet ist.

4. Reibungsbremse nach Anspruch 1, **dadurch gekennzeichnet, dass** die Reibungsbremse (1) ein Rückstellfederelement (17) aufweist, das die Reibungsbremse (1) in Löserichtung beaufschlagt.

5. Reibungsbremse nach Anspruch 4, **dadurch gekennzeichnet, dass** die Selbstverstärkungseinrichtung (19) selbsthemmend ausgebildet ist und dass das Rückstellfederelement (17) bei maximalem Reibwert µₘₐₓ zwischen dem Reibbremsbelag (10) und dem Bremskörper (3) ein Kräftegleichgewicht zwischen der von der Selbstverstärkungseinrichtung (19) bewirkten Andruckkraft und einer Rückstellkraft des Rückstellfederelements (17) erzeugt.

6. Reibungsbremse nach Anspruch 1, **dadurch gekennzeichnet, dass** das Rückstellfederelement (17) eine nicht-proportionale Federkennlinie aufweist.

7. Reibungsbremse nach Anspruch 6, **dadurch gekennzeichnet, dass** das Rückstellfederelement (17) eine Federkraftbegrenzung aufweist.

8. Reibungsbremse nach Anspruch 6, **dadurch gekennzeichnet, dass** das Rückstellfederelement (17) eine degressive Federkennlinie aufweist.

9. Reibungsbremse nach Anspruch 1, **dadurch gekennzeichnet, dass** die Selbstverstärkung mit zunehmender Zuspannung der Reibungsbremse (1) zunimmt.

10. Reibungsbremse nach Anspruch 1, **dadurch gekennzeichnet, dass** die Reibungsbremse (1) einen vom Zuspannweg abhängigen Reibwert µ aufweist.

## Claims

1. Self-energizing electromechanical friction brake, having a friction brake lining (10) which can be pressed for braking against a braking body (3) by way of an actuating device (14), and having a self-energizing device (19) which converts a frictional force which is exerted by the rotating brake body (3) onto the friction brake lining (10) which is pressed against it during braking into a pressure force which, in addition to a pressure force which is applied by the actuating device (14), presses the friction brake lining (10) against the braking body (3), the actuating device (14) having a linear drive with an electromagnet (15) for pressing the friction brake lining (10) against the braking body (3), **characterized in that** the electromagnet (15) has a non-proportional magnetic-force characteristic curve (23).

2. Friction brake according to Claim 1, **characterized in that** the electromagnet (15) has a progressive magnetic-force characteristic curve (23).

3. Friction brake according to Claim 1, **characterized in that** the self-energizing device (19) is of self-locking configuration.

4. Friction brake according to Claim 1, **characterized in that** the friction brake (1) has a restoring spring element (17) which loads the friction brake (1) in the release direction.

5. Friction brake according to Claim 4, **characterized in that** the self-energizing device (19) is of self-locking configuration, and **in that**, in the case of a maximum coefficient of friction µₘₐₓ between the friction brake lining (10) and the braking body (3), the restoring spring element (17) generates a force equilibrium between the pressure force which is brought about by the self-energizing device (19) and a restoring force of the restoring spring element (17).

6. Friction brake according to Claim 1, **characterized in that** the restoring spring element (17) has a non-proportional spring characteristic diagram.

7. Friction brake according to Claim 6, **characterized in that** the restoring spring element (17) has a spring-force limiting means.

8. Friction brake according to Claim 6, **characterized in that** the restoring spring element (17) has a degressive spring characteristic diagram.

9. Friction brake according to Claim 1, **characterized in that** the self-energizing action increases as the application of the friction brake (1) increases.

10. Friction brake according to Claim 1, **characterized in that** the friction brake (1) has a coefficient of friction µ which is a function of the brake application travel.

## Revendications

1. Frein à friction électromécanique à autoamplification, comprenant une garniture de frein à friction (10), qui peut être pressée contre un corps de frein (3) avec un dispositif d'actionnement (14) pour effectuer le freinage, et un dispositif d'autoamplification (19) qui convertit une force de friction exercée par le corps de frein rotatif (3) sur la garniture de frein à friction (10) pressée contre lui lors du freinage en une force de pression, qui presse la garniture de frein à friction (10) en plus d'une force de pression appliquée par le dispositif d'actionnement (14) contre le corps de frein (3), le dispositif d'actionnement (14) présentant un entraînement linéaire avec un électroaimant (15) pour presser la garniture de frein à friction (10) contre le corps de frein (3),
**caractérisé en ce que**
l'électroaimant (15) présente une caractéristique de force magnétique (23) non proportionnelle.

2. Frein à friction selon la revendication 1, **caractérisé en ce que** l'électroaimant (15) présente une caractéristique de force magnétique (23) progressive.

3. Frein à friction selon la revendication 1, **caractérisé en ce que** le dispositif d'autoamplification (19) est réalisé de manière autobloquante.

4. Frein à friction selon la revendication 1, **caractérisé en ce que** le frein à friction (1) présente un élément de ressort de rappel (17) qui sollicite le frein à friction (1) dans le sens d'un desserrage.

5. Frein à friction selon la revendication 4, **caractérisé en ce que** le dispositif d'autoamplification (19) est réalisé de manière autobloquante et **en ce que** l'élément de ressort de rappel (17), pour un coefficient de friction maximal µₘₐₓ entre la garniture de frein à friction (10) et le corps de frein (3) produit un équilibre de forces entre la force de pression provoquée par le dispositif d'autoamplification (19) et une force de rappel de l'élément de ressort de rappel (17).

6. Frein à friction selon la revendication 1, **caractérisé en ce que** l'élément de ressort de rappel (17) présente une caractéristique de ressort non proportionnelle.

7. Frein à friction selon la revendication 6, **caractérisé en ce que** l'élément de ressort de rappel (17) présente une limitation de la force de ressort.

8. Frein à friction selon la revendication 6, **caractérisé en ce que** l'élément de ressort de rappel (17) présente une caractéristique de ressort dégressive.

9. Frein à friction selon la revendication 1, **caractérisé en ce que** l'autoamplification augmente avec l'augmentation du serrage du frein à friction (1) .

10. Frein à friction selon la revendication 1, **caractérisé en ce que** le frein à friction (1) présente un coefficient de friction µ dépendant de la course de serrage.
